# EUROPEAN PATENT SPECIFICATION

(11) **EP 2 533 624 B1**
(45) Date of publication and mention of the grant of the patent: **12.06.2019**
(21) Application number: 11702464.6
(22) Date of filing: 09.02.2011
(51) Int. Cl.: A01D 41/14, A01D 69/06

(54) **HEADER OF A HARVESTER**
VORSATZ FÜR EINE ERNTEMASCHINE
TÊTE POUR MACHINE DE RÉCOLTE

(30) Priority: 09.02.2010 BE 201000065
(43) Date of publication of application: 19.12.2012
(73) Proprietor: CNH Industrial Belgium nv, 8210 Zedelgem (BE)
(72) Inventor: MORTIER, Geert P., B-9000 Gent (BE); MOUTTON, Bart, B-8830 Gits (BE)
(74) Representative: CNH Industrial IP Department
(86) International application number: PCT/EP2011/051882
(87) International publication number: WO 2011/098479

(56) References cited:
- DE-U1- 8 500 847
- US-A- 3 401 511
- US-A- 4 735 036

## Description

### Field of the invention

The present invention relates to a header for a combine or forage harvester, having a belt driven cutting means.

### Background of the invention

One type of header that is fitted to combine and forage harvesters comprises a reel that extends transversely to the direction of travel. A scissor-action cutting means located beneath the reel cuts the stalks of the crop, while spring tines projecting from the rotating reel pick up the cut stalks and push them onto an auger. The auger, or other conventional conveyor means such as drapers, advances the crop towards the centre of the harvester, from where it is conveyed into the processing machinery of the harvester.

The cutter and the auger are driven by a power take off (PTO) shaft arranged at the front end of the harvester, while the reel may be powered separately. Alternatively it is possible to also power the auger separately. The PTO shaft is connected to a drive shaft which on one side of the header carries a drive sheave and a drive sprocket. The drive sheave is connected by a continuous belt, which passes over various idler and tensioning pulleys to a driven sheave. The latter transmits torque to the input shaft of a so-called wobble box. The wobble box is a gearbox of which the output shaft causes one of the blades of the cutter to reciprocate when the input shaft is rotated.

The sprocket on the drive shaft is connected by a chain to another sprocket which drives the auger. Alternatively a belt drive is possible.

A header having the same belt configuration as the preferred embodiment of the present invention is described and illustrated in EP 1 653 122. Furthermore, a header according to the preamble of appended independent claim 1 is disclosed in US 4 735 036 A.

A problem that is encountered in existing headers of the type described above is that the reaction torque of the wobble box is not steady but is subject to torque fluctuations on account of the inertia of the cutter blade. The resulting torsional vibrations are transmitted by the continuous belt back to the PTO shaft and into the harvester drive system. If the auger is driven from the PTO the vibrations can also be transmitted via the sprocket and chain to the belt transmission of the auger.

### Object of the invention

Aside from causing noise and harshness, such vibrations can result in damage to the functional components of both the cutter and the auger and the aim of the present invention is to mitigate this problem.

### Summary of the invention

According to the present invention, there is provided a header for a harvester having a cutter and an auger powered from a PTO shaft of the harvester by means of respective belt or chain transmissions that include drive and driven sheaves or sprockets coupled to one another by a continuous drive belt or chain, characterised in that at least one of the drive and driven sheaves or sprockets of the transmissions driving the cutter and the auger is coupled to an associated shaft by means of a torsional vibration compensator.

According to the invention, the compensator is a friction damper.

The torsional vibration damper may be integrated into a sheave but it is more convenient to support the sheave on its associated shaft by means of a bearing that allows the sheave to rotate freely relative to the shaft and to provide a separate damper for transmitting torque between the sheave and the shaft.

The bearing may be a friction bearing (sleeve bearing) in which the bearing surfaces slide relative to one another.

The torsional vibration damper may comprise a central hub that is splined or otherwise coupled for rotation with the associated shaft, a disc coupled for rotation with the sheave and in frictional contact with the hub and resiliently compressible elements transmitting torque from the hub to the disc.

The resiliently compressible elements preferably comprise coil springs, though they may alternatively be formed of an elastomeric material.

It is advantageous to use resiliently compressible elements having a spring rate that increases with the relative displacement of the hub and the disc.

### Brief description of the drawings

The invention will now be described further, by way of example, with reference to the accompanying drawings, in which :
Figure 1 is a perspective view of a header from one side with the belt transmission cover removed, and
Figure 2 is a section through a sheave connected to a torsional vibration damper.

### Description of the preferred embodiment

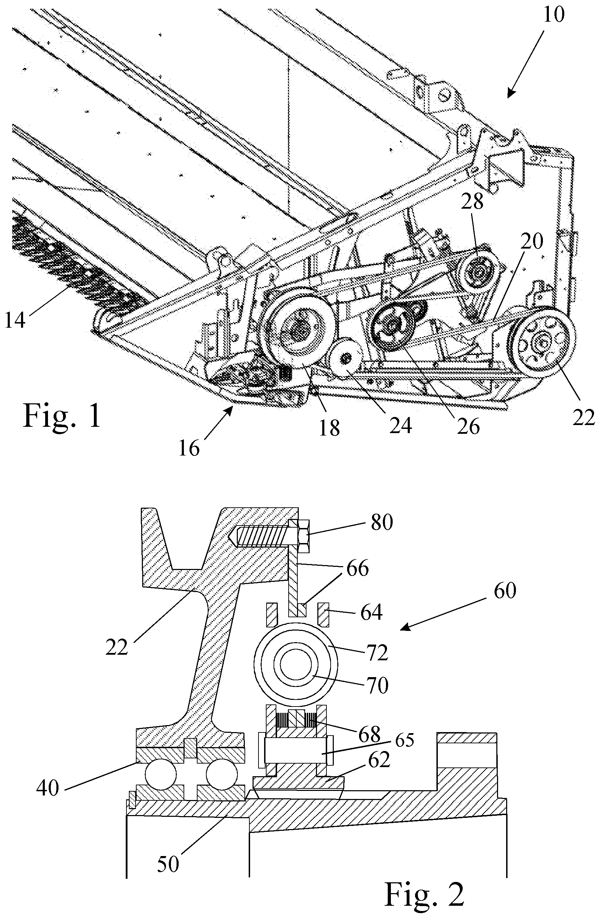

A header 10 is shown in Figure 1 complete with the reel 11. A scissor action cutter (not visibly shown in Figure 1) is arranged near ground level to cut the stalks of the crop so that they may be gathered by the tines on the reel. The crop is fed to an auger (not shown) that drives the crop towards the centre of the header from where they are carried into the processing machinery of the harvester.

The cutter is driven by a so-called wobble box, of which the input shaft is driven by a sheave 18. The power for the sheave 18 is transmitted by a belt 20 from a stationary sheave 22 powered by a front PTO shaft of the harvester.

The wobble box and the cutter are mounted on a movable sub-frame that allows adjustment of the distance between the cutter and the reel 11 to suit the crop. To allow movement of the cutter while maintaining a constant tension in the belt 20, the belt 20 is guided along a system of pulleys 24, 26 and 28. The manner in which the belt tension is maintained constant by this belt geometry is not relevant in the present context, but is described in more detail in EP 1 653 122.

The auger referred to above is also driven by the same PTO shaft but the transmission is not shown in Figure 1. A sprocket mounted on the drive shaft of the sheave 22 drives the auger.

As so far described, the header is conventional. The problem addressed by the present invention is caused by the reaction torque of the wobble box. Because of the inertia of the cutter blade reciprocated by the wobble box, the torque reaction on the sheave 18 is fluctuating and causes torsional vibration of the sheave 18. This vibration is transmitted by the belt 20 back to the drive sheave 22, to the drive shaft and to the PTO shaft of the harvester. Furthermore, the torsional vibrations are transmitted via the sprocket and the chain driving the auger.

To reduce these torsional vibrations, the present invention proposes coupling at least one of the torque transmitting sheaves to its shaft by a torsional vibration damper.

Ideally, the damper should be mounted on the sheave 18 so as to effectively tackle the vibrations at their origin. However, because there is little space in that part of the header for mounting a damper, it may be fitted to the drive sheave 22. This will isolate the vibrations from the PTO shaft and from the transmission driving the auger. As a further possibility, a damper may be mounted on one of the sprockets of the auger chain transmission though this would be less effective. Of course, providing dampers on more than one sheave will improve noise attenuation but it will also increase the cost.

Figure 2 shows an embodiment of the invention in which the damper is mounted between the drive shaft and the sheave 22. The figure shows a section through the sheave 22, its associated shaft 50 and a damper 60 transmitting torque from the shaft 50 to the sheave 22. Instead of the sheave 22 being splined and driven directly by the drive shaft 50, it is supported on the drive shaft 50 by a roller bearing 40 so that it can spin freely on the drive shaft 50.

The damper 60 has a central hub 62 that is splined and driven by the drive shaft 50. The hub 62 is fastened for rotation with two outer discs 64 by means of rivets 65. Two inner discs 66 are sandwiched between the discs 64. The inner discs 66 are free to rotate relative to the hub 62 but are coupled to the discs 64 through friction pads 68. One or more of the discs 66 projects radially beyond the hub 62 and the outer discs 64 and is connected by bolts 80 to the sheave 22.

Additionally, there are arcuate pockets around the perimeter of the two set of discs 64 and 66, each of which receives two coil springs 70 and 72.

Under steady torque, the discs 64 and 66 rotate in unison owing to the torque transmitted through the friction pads 68 and the springs 70 and 72. When there is a torque surge, however, the friction pads 68 slip and the discs 64 and 66 attempt to rotate relative to one another. This relative rotation is resisted by compression of the coil spring 70 and 72. When the torque surge reverses, the springs 70 and 72 relax, causing the discs 55 to move in the opposite direction relative to one another, once again resisted by the friction generated with the pads 68.

In this way, the energy of the torque fluctuations is transferred to the springs 70 and 72 and dissipated in the friction plates 68. As a result, the sheave 22 and its associated drive shaft 50 rotate with a steadier speed and the torque surges are absorbed by energy dissipation within the damper 60.

The reason for using two springs 70 and 72 is that the springs have different spring constants and the resistance they offer increases as the amplitude of the torque surge increases.

The type of torsional vibration damper preferred for use in the present invention and shown in Figure 2 is of a known construction and is more fully described in GB 2221281. This type of damper is commonly found at the centre of clutch discs used in motor vehicles.

## Claims

1. A header (10) for a harvester having a cutter and auger powered from a PTO shaft of the harvester by means of respective belt or chain transmissions that include drive and driven sheaves (22) or sprockets coupled to one another by a continuous drive belt or chain, wherein at least one of the drive and driven sheaves or sprockets of the transmissions driving the cutter and the auger is coupled to an associated shaft (50) by means of a torsional vibration compensator (60),
**characterised in that** the torsional vibration compensator is a friction damper (60).

2. A header as claimed in claim 1, wherein the sheave (22) or sprocket is supported on its associated shaft (50) by means of a bearing (40) that allows the sheave (22) or sprocket to rotate freely relative to the shaft (50) and a separate damper (60) is provided for transmitting torque between the sheave (22) or sprocket and the associated shaft (50).

3. A header as claimed in claim 2, wherein the torsional vibration damper (60) comprises a central hub (62) that is coupled for rotation with the associated shaft (50), a disc (66) which is coupled for rotation with the sheave (22) or sprocket and is in frictional contact with the hub (62), and resiliently compressible elements (70,72) transmitting torque from the hub (62) to the disc (66).

4. A header as claimed in claim 3, wherein the compressible elements (70,72) are coil springs.

5. A header as claimed in claim 3 or 4, wherein the compressible elements (70,72) have a spring rate that increases with the relative displacement of the hub (60) and the disc (66).

6. A header as claimed in any preceding claim, wherein a compensator 60) is provided between a sheave (18) or sprocket and the input shaft of a wobble box connected to a cutter blade.

7. A header as claimed in any preceding claim, wherein a compensator (60) is provided between a drive sheave (22) or sprocket and a drive shaft (50) connectible to a PTO shaft of the harvester.

8. A header as claimed in any preceding claim, wherein a compensator (60) is provided between a sheave or sprocket and the input shaft of an auger.

9. A header as claimed in any preceding claim, wherein a compensator (60) is provided between a sheave or sprocket and a shaft coupled by means of a transmission to a PTO shaft of the harvester.

## Patentansprüche

1. Vorsatz (10) für eine Erntemaschine mit einem Schneidwerk und einem Schneckenförderer, die durch eine Zapfwelle der Erntemaschine mittels entsprechender Riemen- oder Kettengetriebe angetrieben werden, die antreibende und angetriebene Laufrollen (22) oder Zahnräder umfassen, die mittels eines durchgängigen Antriebsriemens oder einer durchgängigen Antriebskette miteinander verbunden sind, wobei zumindest eine der antreibenden oder angetriebenen Laufrollen oder Zahnräder der Getriebe, die das Schneidwerk und den Schneckenförderer antreiben, mittels eines Torsionsschwingungsdämpfers (60) mit einer zugehörigen Welle (50) verbunden ist,
**dadurch gekennzeichnet, dass**
der Torsionsschwingungsdämpfer ein Reibungsdämpfer (60) ist.

2. Vorsatz nach Anspruch 1, wobei die Laufrolle (22) oder das Zahnrad mittels eines Lagers (40) auf der zugehörigen Welle (50) gelagert ist, das es der Laufrolle (22) oder dem Zahnrad ermöglicht, sich bezüglich der Welle (50) frei zu drehen, und ein separater Dämpfer (60) zum Übertragen eines Moments zwischen der Laufrolle (22) oder dem Zahnrad und der zugehörigen Welle (50) vorgesehen ist.

3. Vorsatz nach Anspruch 2, wobei der Torsionsschwingungsdämpfer (60) eine zentrale Nabe (62), die zum Drehen mit der zugehörigen Welle (50) verbunden ist, eine Scheibe (66), die zum Drehen mit der Laufrolle (22) oder dem Zahnrad verbunden ist und die in Reibkontakt mit der Nabe (62) steht, und elastisch komprimierbare Elemente (70, 72) umfasst, die ein Moment von der Nabe (62) auf die Scheibe (66) übertragen.

4. Vorsatz nach Anspruch 3, wobei die komprimierbaren Elemente (70, 72) Schraubenfedern sind.

5. Vorsatz nach Anspruch 3 oder 4, wobei die komprimierbaren Elemente (70, 72) eine Federkonstante aufweisen, die mit der relativen Verschiebung der Nabe (60) und der Scheibe (66) zunimmt.

6. Vorsatz nach einem der vorangehenden Ansprüche, wobei ein Dämpfer (60) zwischen einer Laufrolle (18) oder einem Zahnrad und der Eingangswelle eines Taumelgetriebes vorgesehen ist, das mit einem Schneidmesser verbunden ist.

7. Vorsatz nach einem der vorangehenden Ansprüche, wobei ein Dämpfer (60) zwischen einer Antriebslaufrolle (22) oder einem Antriebszahnrad und einer Antriebswelle (50) vorgesehen ist, die mit einer Zapfwelle der Erntemaschine verbindbar ist.

8. Vorsatz nach einem der vorangehenden Ansprüche, wobei ein Dämpfer (60) zwischen einer Laufrolle oder einem Zahnrad und der Eingangswelle eines Schneckenförderers vorgesehen ist.

9. Vorsatz nach einem der vorangehenden Ansprüche, wobei ein Dämpfer (60) zwischen einer Laufrolle oder einem Zahnrad und einer Welle vorgesehen ist, die mittels eines Getriebes mit einer Zapfwelle der Erntemaschine verbunden ist.

## Revendications

1. Bec cueilleur (10) pour moissonneuse-batteuse comportant une tête de coupe et une vis sans fin motorisées par l'arbre de prise de force de la moissonneuse-batteuse au moyen de ses transmissions à courroie ou à chaîne respectives comprenant des réas d'entraînement et entraînées (22) ou des pignons reliés l'un à l'autre par une courroie ou une chaîne de transmission continue, où au moins l'une des réas d'entraînement et entraînées ou l'un des pignons des transmissions entraînant la tête de coupe et la vis sans fin est relié à un arbre correspondant (50) au moyen d'un compensateur des vibrations de torsion (60), **caractérisé par le fait que**
ce compensateur des vibrations de torsion est un amortisseur à friction (60).

2. Bec cueilleur selon la revendication 1, où la réa (22) ou le pignon est maintenu sur l'arbre correspondant (55) grâce à un roulement (40) qui permet à la réa (22) ou au pignon de tourner librement par rapport à l'arbre (50) et un amortisseur séparé (60) est prévu pour transmettre le couple entre la réa (22) ou le pignon et l'arbre correspondant (50).

3. Bec cueilleur selon la revendication 2, où l'amortisseur des vibrations de torsion (60) comprend un moyeu central (62) en rotation avec l'arbre correspondant (50), un disque (66) couplé en rotation avec la réa (22) ou le pignon et qui se trouve en contact par friction avec le moyeu (62) et des éléments compressibles élastiquement (70, 72) transmettant le couple du moyeu (62) au disque (66).

4. Bec cueilleur selon la revendication 3, où les éléments compressibles (70, 72) sont des ressorts hélicoïdaux.

5. Bec cueilleur selon la revendication 3 ou 4, où les éléments compressibles (70, 72) présentent une raideur de ressort qui augmente avec le déplacement relatif du moyeu (60) et du disque (66).

6. Bec cueilleur tel selon l'une quelconque des revendications précédentes, où un compensateur (60) est prévu entre une réa (18) ou un pignon et l'arbre d'entrée d'une boîtier de renvoi d'angle relié à une lame de coupe.

7. Bec cueilleur selon l'une quelconque des revendications précédentes, dans lequel un compensateur (60) est prévu entre une réa d'entraînement (22) ou un pignon et un arbre d'entraînement (50) qui peut être couplé à un arbre de prise de force de la moissonneuse-batteuse.

8. Bec cueilleur selon l'une quelconque des revendications précédentes, dans lequel un compensateur (60) est prévu entre une réa ou un pignon et l'arbre d'entrée d'une vis sans fin.

9. Bec cueilleur selon l'une quelconque des revendications précédentes, dans lequel un compensateur (60) est prévu entre une réa ou un pignon et un arbre couplé à l'aide d'une transmission à un arbre de prise de force de la moissonneuse-batteuse.
